# EUROPÄISCHE PATENTANMELDUNG

(11) **EP 2 073 003 A1**
(43) Veröffentlichungstag der Anmeldung: **24.06.2009**
(21) Anmeldenummer: 07024983.4
(22) Anmeldetag: 21.12.2007
(51) Int. Cl.: G01N 29/26, G01N 29/06

(54) **Mess- und auswerteeinrichtung zum ermittlen von ungänzen in einem prüfkörper**

(71) Anmelder: SIEMENS AKTIENGESELLSCHAFT, 80333 München (DE)
(72) Erfinder: Clossen-Von Lanken Schulz, Michael, 47608 Geldern (DE); Opheys, Michael, 41334 Nettetal (DE)

(57) **Zusammenfassung**

Die Erfindung betrifft ein Verfahren und eine Vorrichtung zum Ermitteln von Ungänzen (2) in einem Prüfkörper (3), wobei zwei in Phased-Array-Technik ausgebildete Prüfköpfe als Sende- bzw. Empfangsprüfkopf verwendet werden, wobei die Ungänzen (2) im Prüfkörper (3) mittels der TOFD-Methode ermittelt werden.

## Beschreibung

Die Erfindung betrifft eine Mess- und Auswerteeinrichtung zum Ermitteln von Ungänzen in einem Prüfkörper, wobei die Mess- und Auswerteeinrichtung einen in Phased-Array-Technik ausgeführten Sende-Prüfkopf aufweist, wobei der Sende-Prüfkopf zum Aussenden eines Ultraschallsendesignals ausgebildet ist, wobei ein Sende-Einschallwinkel des Ultraschallsendesignals elektronisch einstellbar ist, wobei die Mess- und Auswerteeinrichtung einen in Phased-Array-Technik ausgeführten Empfangs-Prüfkopf aufweist, wobei der Empfangs-Prüfkopf zum Empfangen eines Ultraschallempfangsignals ausgebildet ist, wobei ein Empfangs-Einschallwinkel des Ultraschallempfangsignals elektronisch einstellbar ist.

Des Weiteren betrifft die Erfindung ein Verfahren zum Ermitteln von Ungänzen in einem Prüfkörper, umfassend die folgenden Schritte,
- Anbringen eines in Phased-Array-Technik ausgebildeten Sende-Prüfkopfes und eines Empfang-Prüfkopfes auf dem Prüfkörper,
- Aussenden eines Ultraschallsendesignals aus dem Sende-Prüfkopf, wobei ein Sende-Einschallwinkel des Ultraschallsendesignals elektronisch eingestellt wird,
- Empfangen eines Ultraschallempfangsignals durch den Empfangs-Prüfkopf, wobei ein Empfangs-Einschallwinkel des Ultraschallempfangsignals elektronisch eingestellt wird.

Es ist allgemein bekannt, dass sich Defekte, z. B. in Form von Rissen, negativ auf die Festigkeit eines Bauteiles und damit auch die Sicherheit des Bauteiles auswirken. Solche Risse in der Oberfläche von Bauteilen können unter bestimmten Bedingungen wachsen. Dies trifft insbesondere bei Bauteilen wie z. B. Wellen, Turbinenschaufeln oder insbesondere Turbinenschaufelfüße zu, die neben einer statischen Belastung auch eine dynamische Belastung erfahren.

Zur Ermittelung von Ungänzen an einem Bauelement einer Turbine, wie beispielsweise einer Turbinenschaufel, ist es grundsätzlich bekannt, eine Ultraschalluntersuchung durchzuführen. Solche Untersuchungen sind aufgrund der bei solchen Bauelementen vorliegenden Geometrien jedoch nur sehr begrenzt möglich und auch vergleichsweise fehlerträchtig.

So ist beispielsweise derzeit eine entsprechende Prüfung von Befestigungsbohrungen von Steckfüßen an Turbinenschaufeln nur nach Ausbau der Schaufeln möglich.

Durch den Einsatz der Gruppenstrahlertechnik (Phased Array Technik) kann an dem zu untersuchenden Flächenbereich ein Fehler ohne Manipulation des Prüfkopfes durch eine bildgebende Darstellung angezeigt werden. Dies stellt bereits eine Verbesserung dar, denn es kann insbesondere ein zeitintensiver und daher kostspieliger Aus- und Einbau von Turbinenschaufeln entfallen. Mittels der Gruppenstrahlertechnik kann nämlich die Richtung des abgestrahlten Ultraschalls bzw. die Richtung, aus der der Ultraschall empfangen werden kann, verändert werden.

Durch die Gruppenstrahlertechnik ist es z.B. möglich, sichere und schnelle Analysen in einem Fehlererwartungsbereich von Turbinenschaufelfüßen durchzuführen. Dabei können insbesondere Risse erkannt werden, welche als Ermüdungs- bzw. Schwingungsrisse durch hohe mechanische, thermische oder korrosive Belastung entstehen.

Ungänzen in einem Prüfkörper können durch ein bekanntes Ultraschallverfahren ermittelt werden. Ungänzen können hierbei Risse, Hohlräume oder ähnliches sein. Bei den bekannten Ultraschallverfahren wird ein herkömmlicher Ultraschallsender in einem Abstand a von einem Ultraschallempfänger angeordnet. Unter einem bekannten Winkel α_{S} des Ultraschallsenders wird ein Ultraschall in einer Richtung ausgestrahlt. Trifft dieser Ultraschall auf eine Ungänze, so wird dieser Ultraschall an der Ungänze gebeugt, wobei der gebeugte Ultraschall zum Ultraschallempfänger sich ausbreitet. Sofern der Ultraschallempfänger den passenden Winkel α_{E} aufweist, wird vom Ultraschallempfänger ein klares Signal der Ungänze ermittelt. Über den Abstand a, den Winkeln α_{S}, α_{E} und der Zeit vom Absenden des Ultraschallsignals vom Ultraschallsender und bis zum Empfangen des Ultraschallsignals beim Ultraschallempfänger kann die Position der Ungänze ermittelt werden. Diese Prüftechnik ist allgemein bekannt unter der Abkürzung TOFD, was "Time Of Flight Defraction" bedeutet. Über die Auswertung der Laufzeit des von der Ungänze gebeugten Signals kann die Position und die Größe der Ungänze berechnet werden. Dazu werden einfache trigonometrische Berechnungen benutzt. Bei diesem Prüfverfahren ist der Abstand a und die Wahl der Einschallwinkel α_{S} und α_{E} entscheidend. Soll ein größerer Prüfbereich im Prüfkörper über einen größeren Tiefenbereich geprüft werden, so sind verschiedene Abstände a und daher verschiedene Einschallwinkel αₛ und α_{E} der Prüfköpfe erforderlich. Das bedeutet, dass der Ultraschallsender oder der Ultraschallempfänger mechanisch bewegt werden müssen. Die Prüfung des Prüfkörpers erfordert somit eine vergleichsweise lange Prüfzeit, da die Prüfköpfe mechanisch, beispielsweise von Hand bewegt werden müssen und das Messverfahren nach jeder Bewegung wiederholt wird.

Wünschenswert wäre es, ein Prüfungsverfahren zu haben, bei dem die Messzeit verkürzt ist. An dieser Stelle setzt die Erfindung an, deren Aufgabe es ist, eine Mess- und Auswerteeinrichtung zum Ermitteln von Ungänzen in einem Prüfkörper anzugeben, mit der ein Prüfkörper schnell geprüft werden kann.

Des Weiteren besteht eine Aufgabe der Erfindung darin, ein Verfahren zum Ermitteln von Ungänzen in einem Prüfkörper anzugeben, bei dem ebenfalls die Messzeit verkürzt werden kann.

Die auf die Vorrichtung hin gerichtete Aufgabe wird durch eine Mess- und Auswerteeinrichtung zum Ermitteln von Ungänzen in einem Prüfkörper, wobei die Mess- und Auswerteeinrichtung einen in Phased-Array-Technik ausgeführten Sende-Prüfkopf aufweist, wobei der Sende-Prüfkopf zum Aussenden eines Ultraschallsendesignals ausgebildet ist, wobei ein Sende-Einschallwinkel des Ultraschallsignals elektronisch einstellbar ist, wobei die Mess- und Auswerteeinrichtung einen in Phased-Array-Technik ausgeführten Empfangs-Prüfkopf aufweist, wobei der Empfangs-Prüfkopf zum Empfangen eines Ultraschallempfangsignals ausgebildet ist, wobei ein Empfangs-Einschallwinkel des Ultraschallempfangsignals elektronisch einstellbar ist, wobei eine Auswerteeinheit vorgesehen ist, wobei die Auswerteeinheit zum Ermitteln von Ungänzen im Prüfkörper mittels der TOFD-Methode ausgebildet ist.

Die Erfindung schlägt somit vor, statt herkömmlichen Ultraschallprüfköpfen Ultraschallprüfköpfe in Phased-Array-Technik vorzusehen. Die in Phased-Array-Technik ausgebildeten Prüfköpfe haben den Vorteil, dass der Einschallwinkel in einem weiten Bereich elektronisch variiert werden kann. In der Praxis bedeutet dies, dass der Abstand zwischen dem Ultraschall-Sendekopf und dem Ultraschall-Empfangsprüfkopf einmal eingestellt wird. Ein mechanisches Verschieben, wie es beim konventionellen bzw. herkömmlichen Prüfverfahren erfolgt, entfällt gänzlich, da der Einschallwinkel schnell und zuverlässig elektronisch verändert werden kann. Der Prüfbereich des Prüfkörpers wird dadurch schnell und zuverlässig geprüft.

Die auf das Verfahren hin gerichtete Aufgabe wird gelöst durch ein Verfahren zum Ermitteln von Ungänzen in einem Prüfkörper, umfassend die folgenden Schritte:
- Anbringen eines in Phased-Array-Technik ausgebildeten Sende-Prüfkopfes und eines Empfang-Prüfkopfes auf dem Prüfkörper,
- Aussenden eines Ultraschallsendesignals aus dem Sende-Prüfkopf, wobei ein Sende-Einschallwinkel des Ultraschallsendesignals elektronisch eingestellt wird,
- Empfangen eines Ultraschallempfangsignals durch den Empfangs-Prüfkopf, wobei ein Empfangs-Einschallwinkel des

Ultraschallempfangsignals elektronisch eingestellt wird, gekennzeichnet durch den Schritt,
- dass Ungänzen im Prüfkörper mittels der TOFD-Methode ermittelt werden.

Die an sich bekannte TOFD-Methode wird somit erstmals für Prüfköpfe angewendet, die in Phased-Array-Technik ausgebildet sind.

Vorteilhafte Weiterbildungen sind in den Unteransprüchen angegeben.

So ist es vorteilhaft, dass das Ultraschallsendesignal durch den Sende-Prüfkopf fokussierbar ist. Dies ist ein besonderer Vorteil, der in Phased-Array-Technik ausgebildeten Prüfköpfe. Durch die Fokussierung des Ultraschallsignals ergibt sich ein höherer Schalldruck im Prüfbereich, was zu einer verbesserten Auswertung des Prüfkörpers führt. Eine Fokussierung auf verschiedene Tiefenlagen innerhalb einer Messung ist durch die elektronische Veränderung des Ultraschalleinschallwinkels problemlos möglich. Die Genauigkeit des Prüfens des Prüfkörpers erhöht sich dadurch.

In einer weiteren vorteilhaften Weiterbildung ist ein Gruppenstrahlerprüfkopf vorgesehen, der mehrere linear angeordnete Elemente aufweist, wobei eine erste Anzahl an Elementen als Sende-Prüfkopf ausgebildet ist und eine zweite Anzahl an Elementen als Empfangs-Prüfkopf ausgebildet ist.

Somit wird vorgeschlagen, dass die beiden Prüfköpfe, der Sende-Prüfkopf und der Empfangs-Prüfkopf, nicht als separate Bauteile ausgebildet sind, sondern dass ein einziges Bauteil, der Gruppenstrahlerprüfkopf, verwendet wird, der so eingestellt werden kann, dass ein erster Bereich als Sende-Prüfkopf funktioniert und ein zweiter Bereich als Empfangs-Prüfkopf funktioniert. Dies geschieht, indem eine erste Anzahl an Elementen den Sende-Prüfkopf und eine zweite Anzahl an Elementen den Empfangs-Prüfkopf bilden. Der Vorteil ist hier u. a. darin zu sehen, dass zunächst lediglich ein Bauteil an den Prüfkörper angeordnet werden muss. Dies führt zu einer mechanischen Vereinfachung der Anordnung der Mess- und Auswerteeinrichtung. Zudem liefert diese vorteilhafte Weiterbildung den Vorteil, dass der Abstand zwischen dem Sende-Prüfkopf und dem Empfangs-Prüfkopf mit einfachen Mitteln, nämlich elektronisch, verändert werden kann. Dadurch besteht die Möglichkeit, einen größeren Prüfbereich schnell und zuverlässig zu messen.

Vorteilhafterweise umfasst der Gruppenstrahlerprüfkopf 128 Elemente, wobei die Elemente 1 bis 16 als Sende-Prüfkopf und die Elemente 81 bis 96 als Empfangs-Prüfkopf ausgebildet sind. Durch verschiedene Testreihen und Versuchsreihen konnte eine ideale Anzahl an Elementen ermittelt werden, die bei der Anzahl von 128 liegt. Es hat sich als vorteilhaft erwiesen, wenn die ersten Elemente, d. h. die Elemente 1 bis 16 als Sende-Prüfkopf und die Elemente 81 bis 96 als Empfangs-Prüfkopf ausgebildet sind. Durch diese gezielte Auswahl an Elementen ist eine schnelle und zuverlässige Messung möglich.

In einer weiteren vorteilhaften Weiterbildung sind die Elemente derart ansteuerbar, dass ein Sende-Prüfkopf/Empfänger-Prüfkopf-Paar gebildet wird, wobei die Elemente derart ansteuerbar sind, dass ein Durchschieben des Sende-Prüfkopf/- Empfänger-Prüfkopf-Paares entlang des Gruppenstrahlerprüfkopfes erfolgt.

Es wird hier somit vorgeschlagen, dass der Abstand zwischen dem Sende-Prüfkopf und dem Empfänger-Prüfkopf auf dem Gruppenstrahler fixiert und fest bleibt. Elektronisch kann der Sende-Prüfkopf gleichzeitig mit dem Empfänger-Prüfkopf quasi bewegt werden. Durch das Bewegen dieser Prüfkopfpaare kann der Prüfbereich in einer horizontalen Richtung geprüft werden. Dadurch können horizontal ausgebildete Ungänzen besser ermittelt werden. Außerdem ist eine Fokussierung auf horizontale Risspositionen bei gleichem oder variierendem Abstand der Elemente innerhalb einer Messung möglich.

Mit dem hier vorgestellten Ultraschallprüfverfahren ist es nun möglich, komplette Volumina mittels der TOFD mit nur einer Messfahrt zu untersuchen, ohne das hierfür die notwendige Hardware wie z. B. die Prüfköpfe, Manipulationshilfen, Versatzkeile usw. ausgetauscht werden müssen.

Mit der als Gruppenstrahlerprüfkopf ausgebildeten Mess- und Auswerteeinrichtung ist es möglich, eine asymmetrische Prüfanordnung auszubilden. Beispielsweise kann zur Prüfung von Schaufelbefestigungsnuten in Turbinenrotoren der Gruppenstrahlerprüfkopf bis an die Turbinenschaufel angeordnet werden. Eine direkt unter der Turbinenschaufel vorhandene Ungänze kann dadurch ermittelt werden. Dadurch können quasi Ungänzen ermittelt werden, die nicht zwingend unterhalb des Gruppenstrahlerprüfkopfes angeordnet sein müssen. Es ist vielmehr möglich, auch Ungänzen zu ermitteln, die links oder rechts des Gruppenstrahlerprüfkopfes angeordnet sind.

Die auf das Verfahren hin gerichteten vorteilhaften Weiterbildungen ergeben sich entsprechend aus den zur Vorrichtung hin angegebenen vorteilhaften Weiterbildungen.

Die im Hinblick auf die Vorrichtung aufgeführten Vorteile und bevorzugten Ausgestaltungen lassen sich sinngemäß auf das Verfahren übertragen.

Ein Ausführungsbeispiel der Erfindung wird anhand einer Zeichnung näher erläutert. Darin zeigen die Figuren schematisch:
- Figur 1: eine Prüfanordnung gemäß dem Stand der Technik,
- Figur 2: eine Prüfanordnung mit in Phased-Array-Technik ausgebildeten Prüfköpfen,
- Figur 3: eine Prüfanordnung gemäß Figur 2, wobei eine Un- gänze in einem tieferen Bereich des Prüfkörpers zu ermitteln ist,
- Figur 4: eine Prüfanordnung umfassend einen Gruppenstrahler- prüfkopf.

Komponenten mit gleichen Bezugszeichen haben hierbei eine im Wesentlichen ähnliche Funktion.

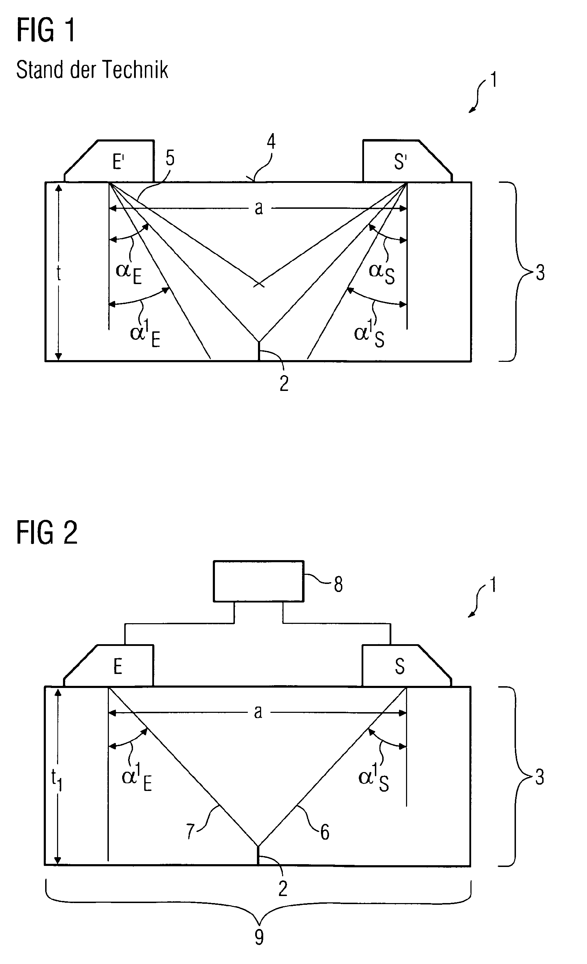

Die Figur 1 zeigt eine Mess- und Auswerteeinrichtung 1 zum Ermitteln von Ungänzen 2 in einem Prüfkörper 3 gemäß dem Stand der Technik. Die Ungänze 2 kann beispielsweise ein Riss oder ein Hohlraum sein. Der Prüfkörper 3 weist eine Tiefe t auf. Der Prüfkörper 3 kann beispielsweise ein Turbinenrotor einer Strömungsmaschine, ein Gehäuse für eine Strömungsmaschine oder ein Turbinenschaufelfuß sein. Ein Sende-Prüfkopf S' und ein Empfangs-Prüfkopf E' werden in einem Abstand a voneinander auf einer Oberfläche 4 des Prüfkörpers 3 angeordnet. Der Sende-Prüfkopf S' und der Empfangs-Prüfkopf E' ist in herkömmlicher Ultraschalltechnik ausgebildet. In einer ersten Messreihe wird der Ultraschall unter einem Winkel α¹_{S} ausgesandt. Der Empfangs-Prüfkopf E' ist derart eingestellt, dass er bereit ist, unter einem Einschallwinkel α¹_{E} zu empfangen. Die Winkel α¹_{S} und α¹_{E} sind im Wesentlichen gleich groß. Aus der Figur 1 ist zu erkennen, dass der vom Sende-Prüfkopf S' ausgesandte Ultraschall nicht an der Ungänze ankommt, d.h. es findet keine Beugung dieses Ultraschalls an der Ungänze 2 statt. In einem zweiten Messzyklus, wobei für diesen zweiten Messzyklus der Sende-Prüfkopf S' und der Empfangs-Prüfkopf E' auf andere Winkel eingestellt werden muss, wird ein zweites Ultraschall-Sendesignal unter dem Winkel αₛ ausgesandt. Dieses ausgesandte Ultraschallsendesignal trifft die Ungänze 2. An der Ungänze 2 wird dieser Ultraschall gebeugt, wodurch ein gebeugtes Ultraschallempfangssignal entsteht, das unter dem Winkel α_{E} vom Empfangs-Prüfkopf E' empfangen wird. Über die bekannten Größen Abstand a, Winkel αₛ und Winkel α_{E} kann die Tiefe t der Ungänze 2 über einfache trigonometrische Rechnungen ermittelt werden. Eine weitere Größe, die für die Ermittlung der Tiefe t benötigt wird, ist die Zeit t_{Dauer}, die der Ultraschall vom Absenden am Sende-Prüfkopf S' bis zum Eintreffen am Empfangs-Prüfkopf E' benötigt. In der Figur 1 ist ein weiterer Messzyklus durch einen dritten Ultraschallstrahlweg 5 symbolisiert. Dieser Ultraschallstrahlweg 5 wird unter einem noch größeren Winkel als der Winkel αₛ vom Sende-Prüfkopf S' ausgesandt und entsprechend unter einem größeren Empfangswinkel α, der größer ist als der Winkel α_{E}, empfangen.

In der Figur 2 ist eine erfindungsgemäße Anordnung der Mess- und Auswerteeinrichtung 1 dargestellt. Der Unterschied zur Figur 1 besteht unter anderem darin, dass nun statt den herkömmlichen Sende-Prüfköpfen S' ein in Phased-Array-Technik ausgeführter Sende-Prüfkopf S verwendet wird, wobei der Sende-Prüfkopf S zum aussenden eines Ultraschallsendesignals 6 ausgebildet ist, wobei ein Sende-Einschallwinkel α¹_{S} des Ultraschallsendesignals 6 elektronisch einstellbar ist. Des weiteren besteht der Unterschied der in Figur 2 dargestellten Mess- und Auswerteeinrichtung 1 gegenüber der Anordnung aus Figur 1 darin, dass die Mess- und Auswerteeinrichtung 1 einen in Phased-Array-Technik ausgeführten Empfangs-Prüfkopf E aufweist, wobei der Empfangs-Prüfkopf E zum Empfangen eines Ultraschallempfangssignals 7 ausgebildet ist, wobei ein Empfangseinschallwinkel α¹_{E} des Ultraschallempfangssignals 7 elektronisch einstellbar ist. Des weiteren weist die Mess- und Auswerteeinrichtung 1 eine Auswerteeinheit 8 auf, wobei die Auswerteeinheit 8 mit dem Sende-Prüfkopf S und dem Empfangs-Prüfkopf E gekoppelt ist, wobei die Auswerteeinheit 8 zum Ermitteln von Ungänzen im Prüfkörper 3 mittels der TOFD-Methode ausgebildet ist. Die Ermittlung der Tiefe t der Ungänze 2 ist daher mit im Wesentlichen identischen trigonometrischen Berechnungen zu ermitteln, wie es in der in Figur 1 dargestellten Mess- und Auswerteeinrichtung 1 erfolgt. Die in Figur 2 dargestellte Mess- und Auswerteeinrichtung 1 bietet allerdings den großen Vorteil, dass der Winkel α¹_{S} und der Winkel α¹_{E} elektronisch schnell einstellbar ist, wodurch der Messbereich 9 des Prüfkörpers 3 schnell ausgewertet werden kann.

Der Messbereich 9 kann mittels der in Phased-Array-Technik ausgebildeten Sende-Prüfköpfe S und der Empfangs-Prüfköpfe E derart geprüft werden, dass der Ultraschall fokussiert ausgesendet wird, was zu einem höheren Schalldruck im Messbereich 9 führt. Dadurch erhöht sich die Messsicherheit bzw. die Messgenauigkeit der Mess- und Auswerteeinrichtung 1. In der in Figur 2 dargestellten Mess- und Auswerteeinrichtung 1 wird auf die Tiefe t₁ fokussiert. Eine Fokussierung auf verschiedene Tiefenlagen innerhalb einer Messung ist dabei durch elektronische Variation der Einschallwinkel α¹_{S} und α¹_{E} problemlos möglich.

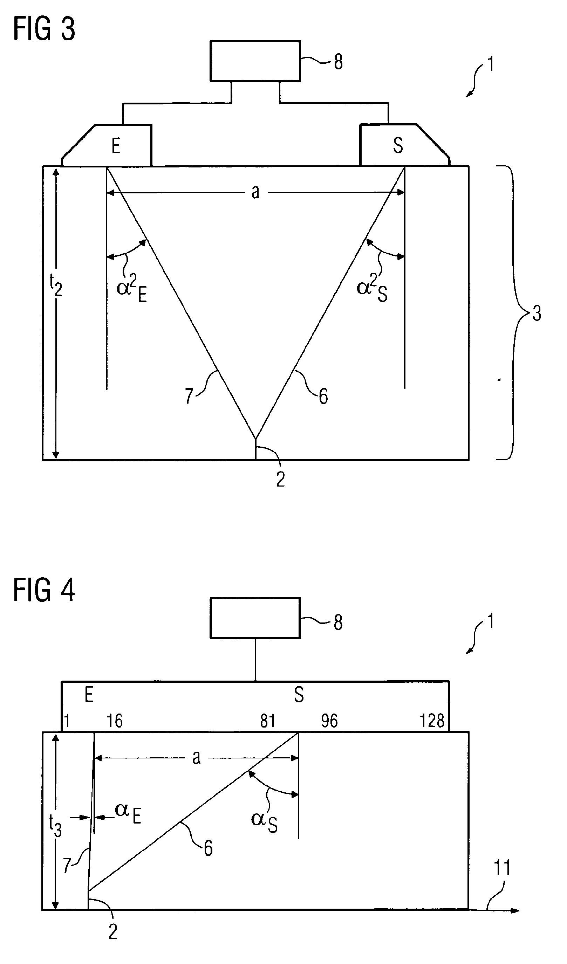

In der Figur 3 ist eine weitere Darstellung der Mess- und Auswerteeinrichtung 1 dargestellt. Der Unterschied der Mess- und Auswerteeinrichtung 1 zu der in Figur 2 besteht darin, dass der Prüfkörper 3 eine größere Tiefe t₂ aufweist bzw. die Ungänze sich in einer größeren Tiefe t₂ befindet. Die Ungänze 2 in der Figur 3 kann leicht ermittelt werden, da die Einschallwinkel α²_{S} und α²_{E} elektronisch variiert werden können. Des Weiteren ist der Abstand a zwischen dem Sende-Prüfkopf S und dem Empfangs-Prüfkopf E gleich. Somit kann wiederum mit einfachen trigonometrischen Berechnungen die Tiefe t₂ ermittelt werden. Diese Ermittlung erfolgt in der Auswerteeinheit 8.

In der Figur 4 ist die Mess- und Auswerteeinrichtung 1 derart ausgebildet, dass statt je einem separaten Sende-Prüfkopf S und einem Empfangs-Prüfkopf E ein einziger linearer Gruppenstrahler 10 verwendet wird, der in Phased-Array-Technik ausgebildet ist. Dieser Gruppenstrahler 10 weist mehrere linear angeordnete Elemente auf. Der in Figur 4 dargestellte lineare Gruppenstrahler 10 weist insgesamt 128 Elemente auf. Die Elemente werden hierbei derart angesteuert, dass die Elemente 1 bis 16 als ein virtueller Empfangs-Prüfkopf E und die Elemente 81 bis 96 als ein virtueller Sende-Prüfkopf S verwendet werden. Durch die Wahl anderer Elemente kann der Abstand a elektronisch eingestellt werden. Die Einschallwinkel α¹_{S} und α¹_{E} werden ebenfalls elektronisch an die Prüftiefe t₃ angepasst. Die in Figur 4 dargestellte Prüfungsanordnung eignet sich bevorzugt zur Prüfung von Schaufelbefestigungsnuten in Turbinenrotoren, da eine Ungänze 2 sehr nah an einem Rand ermittelt werden kann. Die Tiefe t₃ wird hierbei wieder mittels der TOFD-Methode ermittelt, was wiederum in der Auswerteeinheit 8 erfolgt.

Eine weitere Besonderheit der in Figur 4 dargestellten Mess- und Auswerteeinrichtung 1 ist darin zu sehen, dass einzelne Sende-Prüfkopf/Empfänger-Prüfkopf-Paare gebildet werden können. Dies erfolgt dadurch, dass beispielsweise die Elemente 1 bis 16 zum Empfangs-Prüfkopf E und die Elemente 81 bis 96 zum virtuellen Sende-Prüfkopf S gebildet werden. In einem zweiten Messzyklus können beispielsweise die Elemente 2 bis 17 als virtueller Empfangs-Prüfkopf E und die Elemente 82 bis 97 als virtueller Sende-Prüfkopf S eingestellt werden. Das bedeutet, dass ein neues Sende-Prüfkopf/Empfänger-Prüfkopf-Paar gebildet wurde, das gegenüber dem ersten um ein Element verschoben ist. In dieser Weise kann in Richtung des Gruppenstrahlers 10 mehrere solcher Paare gebildet werden, die in einer horizontalen Richtung 11 den Prüfkörper prüfen können. Diese Konfiguration ermöglicht daher die Fokussierung auf verschiedene horizontale Ungänzenpositionen bei gleichem oder variierendem Abstand a der Elemente innerhalb einer Messung. Somit ist es mit der hier vorgestellten Mess- und Auswerteeinrichtung 1 möglich, komplette Volumina mittels TOFD mit nur einer Messfahrt zu untersuchen, ohne dass dafür die notwendige Hardware wie z. B. die Prüfköpfe, Manipulationshilfen oder Vorsatzkeile ausgetauscht werden müssen. Dadurch ist eine erhebliche Zeitersparnis möglich, wobei auch die Prüfsicherheit bei der Bestimmung der Fehlergröße vergrößert ist.

## Patentansprüche

1. Mess- und Auswerteeinrichtung (1) zum Ermitteln von Ungänzen (2) in einem Prüfkörper (3),
wobei die Mess- und Auswerteeinrichtung (1) einen in Phased-Array-Technik ausgeführten Sende-Prüfkopf (S) aufweist, wobei der Sende-Prüfkopf (S) zum Aussenden eines Ultraschallsendesignals (6) ausgebildet ist,
wobei ein Sende-Einschallwinkel (α_{S}, α¹_{S}, α²_{S}) des Ultraschallsignals (6) elektronisch einstellbar ist,
wobei die Mess- und Auswerteeinrichtung (1) einen in Phased-Array-Technik ausgeführten Empfangs-Prüfkopf (E) aufweist,
wobei der Empfangs-Prüfkopf (E) zum Empfangen eines Ultraschallempfangsignals (6) ausgebildet ist,
wobei ein Empfangs-Einschallwinkel (α_{E}, α¹_{E}, α²_{E}) des Ultraschallempfangsignals (7) elektronisch einstellbar ist,
**dadurch gekennzeichnet, dass**
eine Auswerteeinheit (8) vorgesehen ist
wobei die Auswerteeinheit (8) zum Ermitteln von Ungänzen (2) im Prüfkörper (3) mittels der TOFD-Methode ausgebildet ist.

2. Mess- und Auswerteeinrichtung (1) nach Anspruch 3, wobei das Ultraschallsendesignal (6) durch den Sende-Prüfkopf (S) fokussierbar ist.

3. Mess- und Auswerteeinrichtung (1) nach Anspruch 1 oder 2,
wobei ein Gruppenstrahler (10),
umfassend mehrere linear angeordnete Elemente, vorgesehen ist,
wobei eine erste Anzahl an Elementen als Sende-Prüfkopf (S) ausgebildet ist und eine zweite Anzahl an Elementen als Empfangs-Prüfkopf (E) ausgebildet ist.

4. Mess- und Auswerteeinrichtung (1) nach Anspruch 3, wobei einzelne Elementgruppen als Sendeprüfkopf (S) und als Empfangs-Prüfkopf (E) ausgebildet sind.

5. Mess- und Auswerteeinrichtung (1) nach Anspruch 4, wobei der Gruppenstrahler (10) 128 Elemente umfasst, wobei die Elemente 1 bis 16 als Sende-Prüfkopf (S) und die Elemente 81 bis 96 als Empfangs-Prüfkopf (E) ausgebildet sind.

6. Mess- und Auswerteeinrichtung (1) nach Anspruch 3, 4 oder 5,
wobei die Elemente derart ansteuerbar sind,
dass Sende-Prüfkopf/Empfänger-Prüfkopf-Paare gebildet sind, wobei die Elemente derart ansteuerbar sind,
dass ein Durchschieben eines Sende-Prüfkopf/Empfänger-Prüfkopf-Paares entlang des Gruppenstrahlers (10) erfolgt.

7. Verfahren zum Ermitteln von Ungänzen (2) in einem Prüfkörper (3),
umfassend die folgenden Schritte:
- Anbringen eines in Phased-Array-Technik ausgebildeten Sende-Prüfkopfes (S) und eines Empfang-Prüfkopfes (E) auf dem Prüfkörper (3),
- Aussenden eines Ultraschallsendesignals (6) aus dem Sende-Prüfkopf (S), wobei ein Sende-Einschallwinkel (α_{S}, α¹_{S}, α²_{S}) des Ultraschallsendesignals (6) elektronisch eingestellt wird,
- Empfangen eines Ultraschallempfangsignals (7) durch den Empfangs-Prüfkopf (E), wobei ein Empfangs-Einschallwinkel (α_{E}, α¹_{E}, α²_{E}) des Ultraschallempfangsignals (7) elektronisch eingestellt wird,
**gekennzeichnet durch** den Schritt,
- dass Ungänzen (2) im Prüfkörper (3) mittels der TOFD-Methode ermittelt werden.

8. Verfahren nach Anspruch 7,
bei dem der Prüfkörper (3) durch Verändern des Sende-Einschallwinkels (α_{S}, α¹_{S}, α²_{S}) und des Empfang-Einschallwinkels (α_{E}, α¹_{E}, α²_{E}) geprüft wird.

9. Verfahren nach Anspruch 7 oder 8,
bei dem das Ultraschallsendesignal (6) vom Sende-Prüfkopf (S) fokussiert ausgesendet wird.

10. Verfahren nach einem der Ansprüche 7 bis 9,
bei dem ein Gruppenstrahler (10) mit mehreren linear angeordneten Elementen verwendet wird,
wobei das Ultraschallsendesignal (6) aus einer ersten Anzahl an Elementen als Sende-Prüfkopf (S) ausgesendet wird und
das Ultraschallempfangsignal (7) durch eine zweite Anzahl an Elementen als Empfangs-Prüfkopf (E) empfangen wird.

11. Verfahren nach Anspruch 10,
wobei die zweite Anzahl an Elementen hinter der ersten Anzahl an Elementen angeordnet wird.

12. Verfahren nach Anspruch 10 oder 11,
wobei die Elemente derart ausgewählt werden,
dass ein Sende-Prüfkopf/Empfänger-Prüfkopf-Paar gebildet wird und die Elemente derart angesteuert werden,
dass das Sende-Prüfkopf/Empfänger-Prüfkopf-Paar entlang des Gruppenstrahlers (10) verschoben wird.
